# EUROPÄISCHE PATENTSCHRIFT

(11) **EP 1 623 105 B1**
(45) Veröffentlichungstag und Bekanntmachung des Hinweises auf die Patenterteilung: **13.12.2006**
(21) Anmeldenummer: 04726972.5
(22) Anmeldetag: 13.04.2004
(51) Int. Cl.: F02D 35/00, F02D 41/30, F02B 7/06

(54) **VERFAHREN ZUM BETREIBEN EINER WASSERSTOFFBETRIEBENEN BRENNKRAFTMASCHINE**
METHOD FOR OPERATION OF AN INTERNAL COMBUSTION ENGINE RUNNING ON HYDROGEN
PROCEDE DE FONCTIONNEMENT D'UN MOTEUR A COMBUSTION INTERNE FONCTIONNANT A L'HYDROGENE

(30) Priorität: 14.05.2003 DE 10321793
(43) Veröffentlichungstag der Anmeldung: 08.02.2006
(73) Patentinhaber: Bayerische Motoren Werke Aktiengesellschaft, 80809 München (DE)
(72) Erfinder: BETTENDORF, Joachim, 80809 München (DE); PREIS, Michael, 86343 Königsbrunn (DE); STAAR, Bernhard, 82131 Gauting (DE); RINGLER, Jürgen, 86438 Kissing (DE)
(86) Internationale Anmeldenummer: PCT/EP2004/003867
(87) Internationale Veröffentlichungsnummer: WO 2004/101980

(56) Entgegenhaltungen:
- EP-A- 0 754 844
- US-A1- 2002 166 515
- US-B1- 6 210 641

## Beschreibung

Die Erfindung betrifft gemäß dem Oberbegriff des Anspruchs 1 (siehe US 2002 0166515 A1).

Brennkraftmaschinen, insbesondere wasserstoffbetriebene Brennkraftmaschinen, sind über einen weiten Lastbereich extrem mager bei Luftverhältnissen weit über λ=2 betreibbar, so dass das Niveau der Stickoxidemissionen vernachlässigbar ist. Selbst im Rohabgas sind bei einem derartigen Wasserstoffbetrieb deutlich weniger Stockoxide (NO_{X}) enthalten, als bei einem Kohlenwasserstoffbetrieb nach Abgasnachbehandlung mittels eines geregelten Dreiwegekatalysators emittiert werden. Lediglich bei der Abforderung relativ hoher Leistungen ist eine Anfettung des Kraftstoff-Luft-Gemisches in den Bereich 1≤λ<2 erforderlich, was mit einem starken Anstieg der NOₓ-Emissionen und somit mit der Notwendigkeit einer Abgasnachbehandlung verbunden ist.

Der ungedrosselte und magere Betrieb der Brennkraftmaschine über einen weiten Lastbereich bietet deutliche Verbrauchsvorteile, da mit steigendem Luftüberschuss und drosselfreien Betrieb der Wirkungsgrad verbessert wird.

Zur Vermeidung problematischer NOₓ-Emissionen im λ=1-nahen Magerbereich schlägt die DE 195 26 319 A1 vor, stets mit einem Luftverhältnis λ<1 zu fahren und das Abgas über einen Katalysator zu leiten. Dieser Ansatz kann nicht als zielführend angesehen werden, da der besondere Vorteil eines sehr verbrauchsgünstigen Motorbetriebes mit gleichzeitig vernachlässigbaren NOₓ-Emissionen im extremen Magerbereich λ>2 nicht genutzt wird.

Insbesondere bei bivalenten Brennkraftmaschinen, die sowohl mit Wasserstoff als auch mit Kohlenwasserstoffen wie Benzin, Diesel oder Erdgas betreibbar sind, bietet es sich an, die für den Kohlenwasserstoffbetrieb der Brennkraftmaschine erforderliche Abgasnachbehandlungstechnologie auch für den Wasserstoffbetrieb zu nutzen.

Übliche katalytische Abgasnachbehandlungsverfahren bei kohlenwasserstoffbetriebenen Brennkraftmaschinen umfassen Dreiwegekatalysatoren und/oder NOₓ-Speicherkatalysatoren. Nachteilig ist dabei, dass der geregelte Dreiwegekatalysator prinzipbedingt nur bei einem stöchiometrischen Luftverhältnis von λ=1 wirksam stickoxidreduktionsfähig ist, im mageren Bereich bei λ>1 ist sein Stickoxidreduktionsvermögen vernachlässigbar gering, so dass ein Einsatz für Magerkonzepte ausscheidet. Das Reduktionsvermögen von NOₓ-Speicherkatalysatoren, welche prinzipiell bei Sauerstoffüberschuss im Abgas (λ≥1) einsetzbar sind, ist allerdings deutlich schlechter, als das von Dreiwegekatalysatoren bei stöchiometrischem Luftverhältnis, so dass diese Technologie nicht ausreichend ist, um extrem hohen Ansprüchen hinsichtlich der Erfüllung der sehr strengen Abgasgrenzwerte Rechnung zu tragen.

Der Erfindung liegt daher die Aufgabe zugrunde, ein Verfahren zum Betrieb einer insbesondere bivalenten Brennkraftmaschine mit Wasserstoff bereitzustellen, wobei auch bei hohen Lastanforderungen übermäßige NO_{X}-Emissionen wirksam vermieden werden:

Gelöst wird die Aufgabe mit den Merkmalen des Anspruchs 1, wobei gemäß der zugrundeliegende Idee ein Betrieb im wesentlichen im zweiten - nicht unmittelbar an das stöchiometrische Luftverhältnis λ=1 anschließenden - Magerbereich oder bei zumindest annähernd stöchiometrischem Luftverhältnis (λ≈1) erfolgt. Der erste, dem stöchiometrischen Luftverhältnis (λ=1) benachbarte Magerbereich ist ausgeblendet, ein Betrieb in diesem Bereich ist nicht vorgesehen.

Besonders bevorzugte Weiterbildungen und Ausgestaltungen des erfindungsgemäßen Verfahrens sind Gegenstand der Unteransprüche.

Als sehr vorteilhaft wird es angesehen, wenn der erste Magerbereich im wesentlichen Luftverhältnisse (λ) mit signifikanten Stickoxidemissionen (NOₓ-Emissionen) umfasst und der zweite Magerbereich im wesentlichen Luftverhältnisse (λ) mit vernachlässigbaren NOₓ-Emissionen umfasst.

Zweckmäßigerweise erfolgt eine Ausblendung des ersten Magerbereichs durch eine entsprechende Auslegung der auch die Gemischbildung steuernden Motorsteuerung durch Erhöhung der Kraftstoffzufuhr und/oder Androsselung und/oder Variation der Abgasrückführrate. Vorteilhafter Weise bietet die Anwendung von Abgasrückführung die Möglichkeit eines zumindest weitgehend ungedrosselten Motorbetriebes mit entsprechendem Wirkungsgradvorteil.

Gemäß einer besonders zu bevorzugenden Ausgestaltung der Erfindung erfolgt über einen weiten Lastbereich ein Betrieb der Brennkraftmaschine im zweiten Magerbereich bei besonders großem λ, lediglich insbesondere bei sehr großen Lastanforderungen erfolgt ein Betrieb der Brennkraftmaschine bei zumindest annähernd stöchiometrischem Luftverhältnis (λ≈1), wobei ausgehend vom zweiten Magerbereich ein sprunghafter Übergang zum zumindest annähernd stöchiometrischen Luftverhältnis (λ≈1) erfolgt und somit der erste Magerbereich übersprungen wird.

Sehr von Vorteil ist es, wenn insbesondere bei einem Betrieb bei λ≈1 eine katalytische Abgasnachbehandlung erfolgt, wobei zweckmäßigerweise ein Drei-Wege-Katalysator und/oder ein NOₓ-Speicherkatalysator verwendet wird.

Insbesondere bei Verwendung eines NOₓ-Speicherkatalysators wird abhängig vom Speichervermögen und/oder Beladungszustand des NO_{X}-Speicherkatalysators zur Regeneration desselben zumindest kurzzeitig ein Fettbetrieb bei λ<1 empfohlen.

Bevorzugt erfolgt eine Reduktion der Stickoxide (NOₓ) mittels im Abgas enthaltenem, unverbrannten Wasserstoff (H₂).

Nachfolgend ist unter Bezugnahme auf Figuren ein besonders bevorzugtes Ausführungsbeispiel der Erfindung näher erläutert, dabei zeigen schematisch und beispielhaft
- Figur 1: einen NOₓ-Konzentrationsverlauf in Abhängigkeit des Luftverhältnisses λ sowie
- Figur 2: ein Diagramm zum erfindungsgemäßen Betrieb mit Ausblendung eines dem stöchiometrischen Luftverhältnis λ=1 benachbarten ersten Magerbereich.

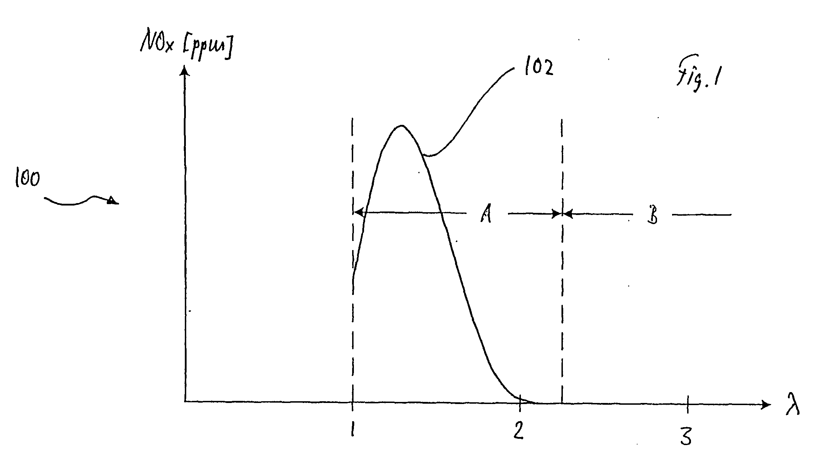

Figur 1 bezieht sich auf eine bivalente Brennkraftmaschine, welche sowohl mit einem kohlenwasserstoffhaltigen Brennstoff wie Benzin, Diesel oder Erdgas, als auch mit Wasserstoff betreibbar ist, die Gemischbildung kann dabei innerhalb und/oder außerhalb des Brennraumes erfolgen. Neben einem herkömmlichen Tank für kohlenwasserstoffhaltigen Brennstoff ist an Bord des hier nicht näher dargestellten Fahrzeuges ein Kryotank zur Aufnahme von tiefkaltem flüssigem Wasserstoff vorgesehen. Das Fahrzeug umfasst zur Abgasnachbehandlung insbesondere hinsichtlich von Stickoxiden (NOₓ) im Abgasstrang einen geregelten Dreiwegekatalysator und/oder einen NOₓ-Speicherkatalysator. Der λ-geregelte Dreiwegekatalysator reduziert bei stöchiometrischem Luftverhältnis λ=1 neben CO- und HC-Emissionen beim Betrieb mit Kohlenwasserstoff auch die NOₓ-Emissionen. Der NOₓ-Speicherkatalysator ist auch bei λ≠1 wirksam und speichert NOₓ im Magerbetrieb bei λ≥1, wohingegen eine Regeneration des NOₓ-Speicherkatalysators in Betriebsphasen mit Kraftstoffüberschuss bei λ≤1 statt findet. Im Abgas enthaltener unverbrannter Wasserstoff unterstützt die Reduktion von NOₓ.

Das Diagramm 100 zeigt qualitativ einen NOₓ-Konzentrationsverlauf 102 bei einer wasserstoffbetriebenen Brennkraftmaschine in Abhängigkeit des Luftverhältnisses λ im Magerbereich für λ>1. Ausgehend von dem stöchiometrischen Luftverhältnis λ=1 steigen die NOₓ-Emissionen mit zunehmendem Luftüberschuss an, bis bei einem Luftverhältnis von λ≈1,1 bis 1,3 ein Maximalwert erreicht wird. Steigt das Luftverhältnis λ weiter an, gehen die NOₓ-Emissionen zurück und erreichen im Bereich λ≈1,8 bis 2,5 vernachlässigbare Werte. Dieser erste, dem stöchiometrischen Luftverhältnis λ=1 benachbarte Magerbereich ist mit A bezeichnet. Der weitere Magerbereich, welcher durch vernachlässigbare NOₓ-Emissionen gekennzeichnet ist, ist mit B bezeichnet.

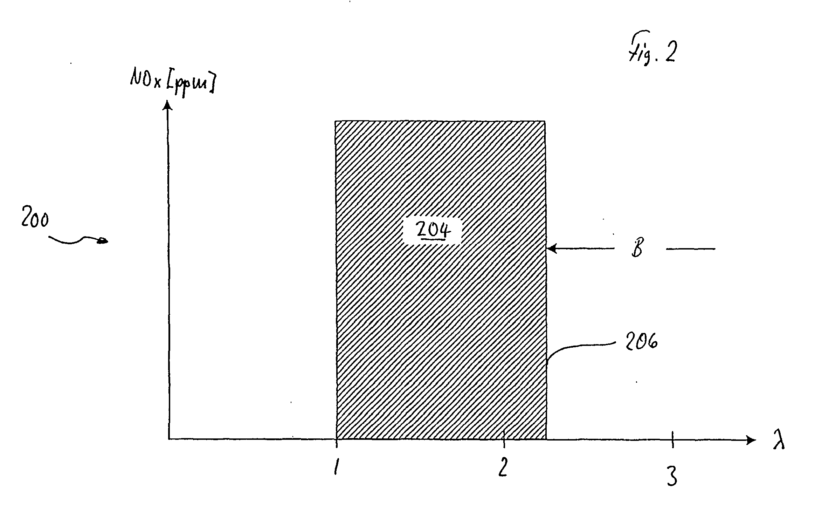

Ein Betrieb im Bereich B ist in einem weiten Lastbereich möglich. Lediglich im obersten Lastbereich ist eine Anfettung des Gemisches in Richtung λ=1 notwendig. Um auch bei sehr hohen Lastanforderungen die NOₓ-Emissionen gering zu halten, erfolgt ein Betrieb gemäß dem mit Figur 2 gezeigten Diagramm 200, welches die Ausblendung des dem stöchiometrischen Luftverhältnis λ=1 benachbarten ersten Magerbereichs 204 zeigt.

Ausgehend von einem Betrieb im Bereich B erfolgt bei einer besonders großen Lastanforderung eine Anfettung des Gemisches sprunghaft bis auf λ=1, wobei der geregelte Dreiwegekatalysator wirksam wird; der erste Magerbereich 204 wird ausgeblendet, ein Betrieb in diesem Bereich 204 ist nicht vorgesehen. Die Sprunggrenze 206, welche das untere Ende des zweiten Magerbereiches B markiert, ist abhängig von den jeweils einzuhaltenden NOₓ-Grenzwerten, vorliegend liegt die Sprunggrenze 206 im Bereich 1,8≤λ≤2,5. Die Sprunggrenze 206 kann fest oder abhängig von Randbedingungen variabel sein. Bei Anwendung eines NOₓ-Speicherkatalysators kann die Schärfe der Sprunggrenze vorteilhaft zur Vereinfachung des Motormanagements und Erweiterung des ungedrosselten, verbrauchsgünstigen Magerbetriebes aufgeweicht werden.

Insbesondere wenn zur Abgasnachbehandlung ein NOₓ-Speicherkatalysator verwendet wird, erfolgt ausgehend von einem Betrieb im Bereich B bei einer besonders großen Lastanforderung abhängig vom Speichervermögen und/oder Beladungszustand des NOₓ-Speicherkatalysators eine Anfettung des Gemisches sprunghaft auf λ≤1, so dass gegebenenfalls eine Regeneration des beladenen NOₓ-Speicherkatalysators erfolgen kann. Nach erfolgter Regeneration wird der Motor bei zumindest annähernd stöchiometrischem Luftverhältnis (λ≈1) weiterbetrieben, solange die Anforderung einer besonders großen Last besteht.

## Patentansprüche

1. Verfahren zum Betreiben einer Brennkraftmaschine, insbesondere einer bivalenten Brennkraftmaschine, welche gesteuert mittels einer Steuereinrichtung mager bei λ>1 mittels Wasserstoff (H₂) betreibbar ist, wobei ein erster, dem stöchiometrischen Luftverhältnis (λ=1) benachbarter Magerbereich und ein zweiter sich diesem im Richtung größerer λ-Werte anschließender zweiter Magerbereich definiert sind und ein Betrieb im wesentlichen im zweiten Magerbereich (B) oder bei zumindest annähernd stöchiometrischem Luftverhältnis (λ≈1) erfolgt, **dadurch gekennzeichnet, dass** der erste Magerbereich (204) steuerungsseitig ausgeblendet ist.

2. Verfahren nach Anspruch 1, **dadurch gekennzeichnet, dass** der erste Magerbereich (A) im wesentlichen Luftverhältnisse (λ) mit signifikanten Stickoxidemissionen (NOₓ-Emissionen) umfasst und der zweite Magerbereich (B) im wesentlichen Luftverhältnisse (λ) mit vernachlässigbaren NOₓ-Emissionen umfasst.

3. Verfahren nach einem der vorhergehenden Ansprüche, **dadurch gekennzeichnet, dass** über einen weiten Lastbereich ein Betrieb der Brennkraftmaschine im zweiten Magerbereich (B) erfolgt.

4. Verfahren nach einem der vorhergehenden Ansprüche, **dadurch gekennzeichnet, dass** insbesondere bei großen Lastanforderungen ein Betrieb der Brennkraftmaschine bei zumindest annähernd stöchiometrischem Luftverhältnis (λ≈1) erfolgt, wobei ausgehend vom zweiten (B) Magerbereich ein sprunghafter Übergang zum zumindest annähernd stöchiometrischen Luftverhältnis (λ≈1) erfolgt.

5. Verfahren nach einem der vorhergehenden Ansprüche, **dadurch gekennzeichnet, dass** der Übergang zum zumindest annähernd stöchiometrischen Luftverhältnis (λ≈1) durch eine entsprechend erhöhte Kraftstoffzufuhr und/oder Abgasrückführrate und/oder eine verringerte Luftzufuhr erreicht wird.

6. Verfahren nach einem der vorhergehenden Ansprüche, **dadurch gekennzeichnet, dass** insbesondere bei einem Betrieb bei λ≈1 eine Abgasnachbehandlung mittels Katalysator erfolgt.

7. Verfahren nach Anspruch 6 **dadurch gekennzeichnet, dass** es sich bei dem Katalysator um einen Drei-Wege-Katalysator und/oder einen NOₓ-Speicherkatalysator handelt.

8. Verfahren nach Anspruch 6 oder 7, **dadurch gekennzeichnet, dass** insbesondere bei Verwendung eines NOₓ-Speicherkatalysators zumindest kurzzeitig abhängig vom Speichervermögen und/oder Beladungszustand des NOₓ-Speicherkatalysators ein Fettbetrieb bei λ< =1 erfolgt.

9. Verfahren nach einem der Ansprüche 7 bis 8 **dadurch gekennzeichnet, dass** eine Reduktion der Stickoxide (NOₓ) mittels im Abgas enthaltenem, unverbrannten Wasserstoff (H₂) erfolgt.

## Claims

1. A method of operating an internal combustion engine, especially a bivalent engine, operating with a lean mixture of hydrogen (H₂) at λ > 1, controlled by a control device, wherein a first lean region near the stoichiometric air ratio (λ = 1) and a second lean region adjacent the first in the direction of higher λ values are defined and operation occurs substantially in the second lean region (B) or with an at least approximately stoichiometric air ratio (λ ≈ 1), **characterised in that** the first lean region (204) is cut out by the control means.

2. A method according to claim 1, **characterised in that** the first lean region (A) substantially comprises air ratios (λ) with significant emission of nitrogen oxides (NOₓ emission) and the second lean region (B) substantially comprises air ratios (λ) with negligible NOₓ emission.

3. A method according to any of the preceding claims, **characterised in that** the engine is operated in the second lean region (B) over a wide range of loads.

4. A method according to any of the preceding claims, **characterised in that** especially when a heavy load is required, the engine is operated with an approximately stoichiometric air ratio (λ ≈ 1) wherein an abrupt transition is made, starting from the second lean region (B), to an at least approximately stoichiometric air ratio (λ ≈ 1).

5. A method according to any of the preceding claims, **characterised in that** the transition to an at least approximately air ratio (λ ≈ 1) is obtained by a sufficiently increased fuel supply and/or exhaust gas recirculation rate and/or a reduced air supply.

6. A method according to any of the preceding claims, **characterised in that** exhaust treatment by catalyst is effected, especially at a region where λ ≈ 1.

7. A method according to claim 6, **characterised in that** the catalytic converter is a three-way converter and/or an NOₓ storage converter.

8. A method according to claim 6 or claim 7, **characterised by** rich operation at λ ≤ 1, especially when using an NOₓ storage catalyst, for at least a short time in dependence on the storage capacity and/or the load on the NOₓ storage catalyst.

9. A method according to claim 7 or claim 8, **characterised by** reduction of nitrogen oxides (NOₓ) by unburnt hydrogen (H₂) contained in the exhaust gas.

## Revendications

1. Procédé de fonctionnement d'un moteur à combustion interne, en particulier d'un moteur à combustion interne bivalent, qui peut fonctionner sous le contrôle d'un dispositif de commande en mode pauvre avec λ>1 au moyen d'hydrogène (H₂), dans lequel une première plage pauvre voisine du coefficient d'air (λ=1) et une deuxième plage pauvre contiguë en direction de valeurs λ plus grandes sont définies et un fonctionnement a lieu essentiellement sur la deuxième plage pauvre (B) ou avec un coefficient d'air au moins presque stoechiométrique (λ≈1),
**caractérisé en ce que**
la première plage pauvre (204) est exclue par la commande.

2. Procédé selon la revendication 1,
**caractérisé en ce que**
la première plage pauvre (A) comprend essentiellement des coefficients d'air (λ) avec des émissions d'oxyde d'azote (émissions de NOₓ) significatives et la deuxième plage pauvre (B) essentiellement des coefficients d'air (λ) avec des émissions de NOx négligeables.

3. Procédé selon une des revendications précédentes,
**caractérisé en ce que**
sur une vaste plage de charge, un fonctionnement du moteur à combustion interne se fait sur la deuxième plage pauvre (B).

4. Procédé selon une des revendications précédentes,
**caractérisé en ce qu'**
en particulier en cas d'exigences de charge importantes, un fonctionnement du moteur à combustion interne se fait avec un coefficient d'air au moins presque stoechiométrique (λ≈1), une transition par saut se faisant de la deuxième plage pauvre (B) au coefficient d'air au moins presque stoechiométrique (λ≈1).

5. Procédé selon une des revendications précédentes,
**caractérisé en ce que**
la transition au coefficient d'air au moins presque stoechiométrique (λ≈1) est réalisée par une augmentation en conséquence de l'alimentation en carburant et/ou du taux de réinjection des gaz d'échappement, et/ou une réduction de l'alimentation en air.

6. Procédé selon une des revendications précédentes,
**caractérisé en ce qu'**
en particulier lors d'un fonctionnement avec λ≈1, on effectue un post-traitement des gaz d'échappement au moyen d'un catalyseur.

7. Procédé selon la revendication 6,
**caractérisé en ce que**
le catalyseur est un catalyseur à trois voies et/ou un catalyseur à accumulateur de NOx.

8. Procédé selon la revendication 6 ou 7,
**caractérisé en ce qu'**
en particulier lorsqu'un catalyseur à accumulateur de NOx est utilisé, un fonctionnement riche avec λ<=1 a lieu au moins brièvement, en fonction de la capacité d'accumulation et/ou de l'état de charge du catalyseur à accumulateur de NOx.

9. Procédé selon une des revendications 6 à 8,
**caractérisé en ce qu'**
une réduction des oxydes d'azote (NOₓ) se fait au moyen de l'hydrogène (H₂) non brûlé contenu dans les gaz d'échappement.
